# EUROPÄISCHE PATENTSCHRIFT

(11) **EP 3 382 271 B1**
(45) Veröffentlichungstag und Bekanntmachung des Hinweises auf die Patenterteilung: **29.07.2020**
(21) Anmeldenummer: 17163613.7
(22) Anmeldetag: 29.03.2017
(51) Int. Cl.: F21V 9/02, F21V 9/08, G01N 17/00, F21S 8/00, F21V 14/08, G01N 33/00, G02B 5/20, G02B 26/02

(54) **VORRICHTUNG ZUR ANPASSUNG DER BESTRAHLUNGSSTÄRKE**
DEVICE FOR ADAPTING THE INTENSITY OF RADIATION
DISPOSITIF D'ADAPTATION DE L'INTENSITÉ DE RAYONNEMENT

(43) Veröffentlichungstag der Anmeldung: 03.10.2018
(73) Patentinhaber: Atlas Material Testing Technology GmbH, 63589 Linsengericht/Altenhasslau (DE)
(72) Erfinder: GLEISSNER, Christoph, 65428 Rüsselsheim (DE); HETZER, Enrico, 64560 Riedstadt (DE)
(74) Vertreter: Lambsdorff & Lange Patentanwälte Partnerschaft mbB

(56) Entgegenhaltungen:
- WO-A1-93/24786
- WO-A1-2011/033025
- DE-A1-102013 227 096
- DE-U1- 20 103 645
- US-A- 5 282 115
- US-A1- 2007 253 215
- US-A1- 2007 267 056
- US-A1- 2011 019 388
- US-A1- 2012 223 733

## Beschreibung

### TECHNISCHES GEBIET

Die vorliegende Offenbarung bezieht sich auf eine Vorrichtung zur Anpassung der Bestrahlungsstärke von Licht, welches von einer Strahlungsquelle emittiert worden ist, die Verwendung eines gewebten Metall- oder Edelstrahldrahts als Neutraldichtefilter in einer Vorrichtung zur Anpassung der Bestrahlungsstärke und auf den Einsatz einer derartigen Vorrichtung in einer Vorrichtung zur Prüfung der Auswirkung von Lichtstrahlung auf ein Objekt.

### HINTERGRUND

Es sind seit geraumer Zeit Vorrichtungen zur Simulation von Sonnenlicht, auch Sonnensimulatoren genannt, bekannt. Ein Sonnensimulator kann dazu dienen, die Auswirkungen des Sonnenlichts auf bestimmte zu bestrahlende Objekte unter Laborbedingungen zu untersuchen. Da natürliches Sonnenlicht starken zeitlichen Schwankungen unterliegt, hat der Einsatz eines Sonnensimulators gegenüber Freilandversuchen den Vorteil, dass Messungen unter definierten, kontinuierlichen, tages- und jahreszeitlich unabhängigen Bedingungen durchgeführt und auch reproduziert werden können.

Es ist beispielsweise bekannt, dass Sonnenlicht polymere Materialien schädigen kann. In der Regel leitet es den Abbauprozeß ein, der sich in Wechselwirkung mit Temperatur, Feuchte und weiteren Einflüssen beschleunigen kann. Ebenso wichtig ist es, die Effekte des Wärmeeintrags über die Sonne auf Baugruppen sowie letztlich auf das komplette Produkt zu verstehen. Hier werden wichtige Erkenntnisse zur Betriebsfähigkeit unter Wärmelast gewonnen und das Temperaturmanagement und die Produktstabilität überprüft.

Die Anwendungs- und Einsatzmöglichkeiten von Sonnensimulatoren reichen von kleinen Labor- und Walk-In-Kammern für Komponenten- oder Baugruppenprüfung, über Drive-In-Kammern für komplette Fahrzeuge bis hin zu Hallen-Großanlagen für LKWs, Züge oder Flugzeuge. Daneben ist eine möglichst hohe spektrale Übereinstimmung der künstlichen Lichtquelle mit dem natürlichen Sonnenlicht entscheidend für die Güte der zu simulierenden Testbedingungen und ihrer verläßlichen Wiederholbarkeit. Im Falle von Abweichungen können spektrale optische Filter eingesetzt werden, um das Spektrum demjenigen des Sonnenlichts anzupassen.

### KURZFASSUNG

Erfindungsgemäß umfasst eine Vorrichtung zur Anpassung der Bestrahlungsstärke eine Strahlungsquelle und mindestens ein vor der Strahlungsquelle bewegbar angeordnetes Neutraldichtefilter, wobei das Neutraldichtefilter in den Strahlengang der Strahlungsquelle oder aus dem Strahlengang der Strahlungsquelle bewegt werden kann, und wobei die Vorrichtung die Merkmale gemäß dem Anspruch 1 umfasst.

Nach einem zweiten Aspekt der Offenbarung ist ein Computerprogrammprodukt dafür ausgelegt, eine Vorrichtung gemäß dem ersten Aspekt anzusteuern.

Nach einem dritten Aspekt der Offenbarung wird ein gewebter Metall- oder Edelstahldraht als Neutraldichtefilter in einer Vorrichtung zur Anpassung der Bestrahlungsstärke verwendet.

Nach einem vierten Aspekt der Offenbarung umfasst eine Vorrichtung zur Prüfung der Auswirkung von Lichtstrahlung auf ein Objekt mindestens eine Vorrichtung nach dem ersten Aspekt und eine Einrichtung zur Aufnahme eines zu bestrahlenden Objekts.

Der Fachmann erkennt zusätzliche Merkmale und Vorteile beim Lesen der nachfolgenden ausführlichen Beschreibung und der beiliegenden Zeichnungen.

### KURZE BESCHREIBUNG DER ZEICHNUNGEN

Die beiliegenden Zeichnungen stellen Ausführungsbeispiele dar und dienen zusammen mit der Beschreibung zum Erläutern von Prinzipien der vorliegenden Offenbarung sowie Einzelheiten der Ausführungsbeispiele.
Fig. 1 zeigt eine schematische Querschnittsseitenansicht einer Vorrichtung zur Anpassung der Bestrahlungsstärke, welche das grundlegende Prinzip der vorliegenden Offenbarung illustriert.
Fig. 2 umfasst Fig. 2A bis 2D und zeigt verschiedene Ansichten einer Vorrichtung zur Anpassung der Bestrahlungsstärke gemäß einem Ausführungsbeispiel, bei welchem die Vorrichtung zwei jeweils in Filterrahmen befestigte und um die Strahlungsquelle verschwenkbare Neutraldichtefilter aufweist.
Fig. 3 umfasst Fig. 3A bis 3C und zeigt Ansichten technischer Details zur Realisierung einer Vorrichtung gemäß Fig. 2 gemäß einem Ausführungsbeispiel.
Fig. 4 umfasst Fig. 4A bis 4D und zeigt jeweils zwei verschiedene Ansichten einer Vorrichtung gemäß Fig. 2 bei verschiedenen Stellungen der beiden Neutraldichtefilter gemäß einem Ausführungsbeispiel.

### DETAILLIERTE BESCHREIBUNG

In der folgenden ausführlichen Beschreibung wird auf die beigefügten Zeichnungen Bezug genommen, die Teil dieser bilden und in denen zur Veranschaulichung spezifische Ausführungsbeispiele gezeigt sind, in denen die vorliegende Offenbarung ausgeübt werden kann. In dieser Hinsicht wird Richtungsterminologie wie etwa "oben", "unten", "vorne", "hinten", "vorderes", "hinteres", usw. mit Bezug auf die Orientierung der beschriebenen Figur(en) verwendet. Da Komponenten von Ausführungsbeispielen der vorliegenden Offenbarung in einer Anzahl verschiedener Orientierungen positioniert werden können, dient die Richtungsterminologie zur Veranschaulichung und ist auf keinerlei Weise einschränkend. Es versteht sich, dass andere Ausführungsbeispiele benutzt und strukturelle oder logische Änderungen vorgenommen werden können, ohne von dem Schutzumfang der vorliegenden Offenbarung abzuweichen. Die folgende ausführliche Beschreibung ist deshalb nicht in einschränkendem Sinne aufzufassen und der Schutzumfang der vorliegenden Offenbarung wird durch die angefügten Ansprüche definiert.

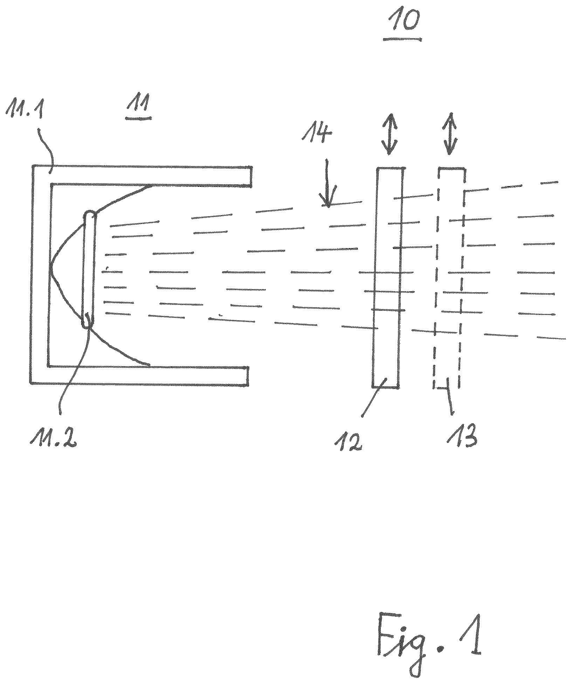

Fig. 1 zeigt schematisch ein grundlegendes Ausführungsbeispiel einer Vorrichtung zur Anpassung der Bestrahlungsstärke gemäß einem nicht beanspruchten Beispiel. Die Vorrichtung 10 gemäß dem ersten Aspekt weist dementsprechend eine Strahlungsquelle 11 und mindestens ein vor der Strahlungsquelle 11 bewegbar angeordnetes Neutraldichtefilter 12 auf. Das Neutraldichtefilter 12 ist derart angeordnet, dass die von der Strahlungsquelle 11 emittierte Strahlung 14 durch das Neutraldichtefilter 12 hindurchtritt. Wie durch den Doppelpfeil angedeutet ist, ist das Neutraldichtefilter 12 derart bewegbar angeordnet, dass es in den Strahlengang der Strahlungsquelle 11 oder aus dem Strahlengang der Strahlungsquelle 11 bewegt werden kann.

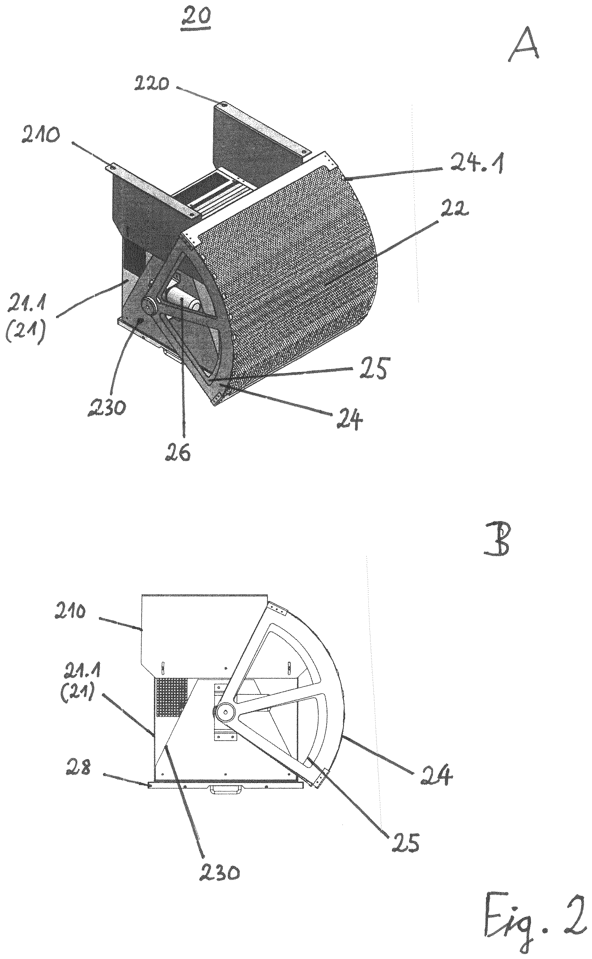

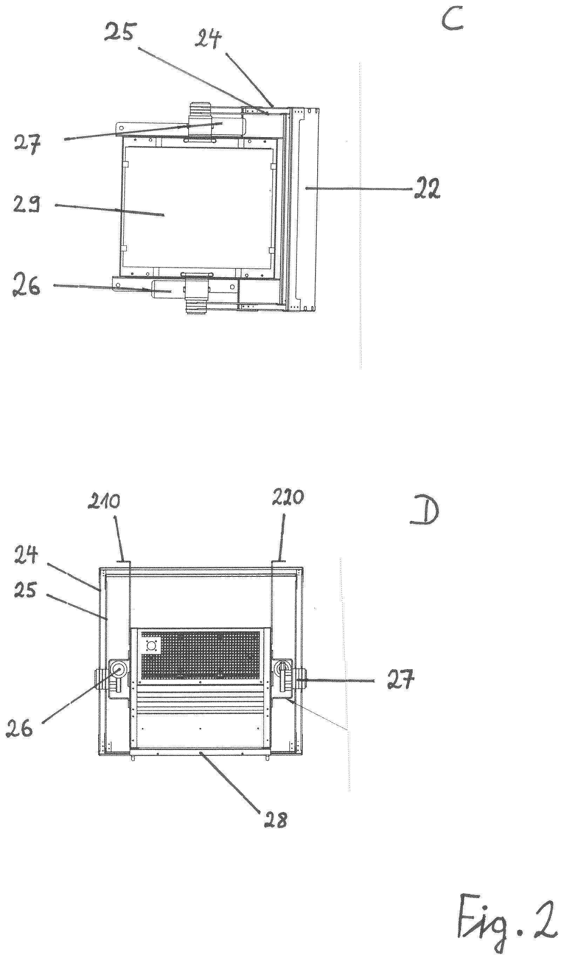

Im Folgenden werden Ausführungsbeispiele für bestimmte Ausgestaltungen und Weiterbildungen der Vorrichtung gemäß dem ersten Aspekt anhand bestimmter Merkmale vorgestellt. Diese Merkmale können einzeln oder in Kombination miteinander zur Anwendung kommen. Einige dieser Merkmale sind in den in den Figuren 2 bis 4 dargestellten Ausführungsbeispielen realisiert und werden weiter unten noch im Detail beschrieben werden.

Gemäß einem Ausführungsbeispiel der Vorrichtung 10 nach dem ersten Aspekt weist diese mindestens ein weiteres Neutraldichtefilter 13 (gestrichelt) auf. Dieses kann in ebensolcher Weise wie das Neutraldichtefilter 12 in oder aus dem Strahlengang der Strahlungsquelle 11, insbesondere unabhängig von dem Neutraldichtefilter 12, bewegbar angeordnet sein, wie durch einen weiteren Doppelpfeil angedeutet ist. Dabei ist das weitere Neutraldichtefilter 13 im Strahlengang an einer anderen Position als das Neutraldichtefilter 12 positionierbar, so dass die beiden Neutraldichtefilter 12 und 13 im Strahlengang hintereinander angeordnet werden können. Die Neutraldichtefilter 12 und 13 können gleiche oder verschiedene Dichtegrade und somit Transmissionsgrade aufweisen, wobei sich im letzteren Fall je nach Position der Neutraldichtefilter 12 und 13 im Strahlengang oder außerhalb davon vier verschiedene Beträge der Bestrahlungsstärke im Strahlengang hinter den Neutraldichtefiltern 12 und 13 einstellen lassen können.

Gemäß einem Ausführungsbeispiel der Vorrichtung 10 nach dem ersten Aspekt weist die Strahlungsquelle 11 ein Gehäuse 11.1 und eine in dem Gehäuse 11.1 befestigte Lichtquelle 11.2 auf. Gemäß einem weiteren Ausführungsbeispiel ist die Lichtquelle 11.2 derart beschaffen, dass sie ein Spektrum aussendet, welches das Sonnenspektrum möglichst weitgehend approximiert. Gemäß einem weiteren Beispiel können in dem oder außerhalb des Gehäuses 11.1 geeignete optische Filter angeordnet werden, um die Approximation des Spektrums an das Sonnenspektrum weiter zu verbessern. Gemäß einem weiteren Ausführungsbeispiel kann die Lichtquelle 11.2 durch eine Metallhalogenidlampe gegeben sein. Gemäß einem weiteren Ausführungsbeispiel kann die Lichtquelle 11.2 durch eine Xenonlampe gegeben sein.

Gemäß einem Ausführungsbeispiel der Vorrichtung 10 nach dem ersten Aspekt weist das mindestens eine Neutraldichtefilter 12 einen gewebten Metall- oder Edelstrahldraht auf. Gemäß einem weiteren Ausführungsbeispiel davon kann der Transmissionsgrad eines derartigen Neutraldichtefilters über die Dichte des Gewebes eingestellt werden. Gemäß einem weiteren Ausführungsbeispiel kann der gewebte Metall- oder Edelstrahldraht geschwärzt sein.

Gemäß einem Ausführungsbeispiel der Vorrichtung 10 nach dem ersten Aspekt weist das mindestens eine Neutraldichtefilter 12 eine Lochfolie oder ein Lochblech auf. Gemäß einem weiteren Ausführungsbeispiel davon kann der Transmissionsgrad eines derartigen Neutraldichtefilters im Falle von äquidistant gelochten Folien oder Blechen durch die Größe der Löcher bzw. das Verhältnis Lochfläche zu Gesamtfläche eingestellt werden. Gemäß einem weiteren Ausführungsbeispiel davon kann die Folie oder das Blech geschwärzt sein.

Gemäß weiteren Ausführungsbeispielen der Vorrichtung 10 nach dem ersten Aspekt kann das mindestens eine Neutraldichtefilter 12 auch durch Neutral- oder Graugläser oder Neutralreflexionsfilter gegeben sein.

Gemäß einem Ausführungsbeispiel der Vorrichtung 10 nach dem ersten Aspekt ist die Lichtleistung der Lichtquelle 11.2 regelbar oder dimmbar. Gemäß einem weiteren Ausführungsbeispiel davon ist die Lichtleistung mittels eines Steuergeräts wie eines elektrischen Vorschaltgeräts regelbar.

Erfindungsgemäß ist das mindestens eine Neutraldichtefilter 12 entlang einer gewölbten Fläche angeordnet. Erfindungsgemäß ist das mindestens eine Neutraldichtefilter 12 entlang eines Abschnitts einer zylindrischen Fläche angeordnet, wobei es entlang der zylindrischen Fläche bewegbar ist.

Gemäß einem Ausführungsbeispiel der Vorrichtung 10 nach dem ersten Aspekt ist das mindestens eine Neutraldichtefilter 12 durch eine mechanische Verstellvorrichtung bewegbar. Gemäß einem weiteren Ausführungsbeispiel davon ist die mechanische Verstellvorrichtung mit dem Gehäuse 11.1 der Strahlungsquelle 11 verbunden, insbesondere direkt mit dem Gehäuse 11.1 der Strahlungsquelle 11 verbunden.

Erfindungsgemäß ist das mindestens eine Neutraldichtefilter 12 um die Strahlungsquelle 11 verschwenkbar angeordnet. Erfindungsgemäß ist die Anordnung derart, dass das Neutraldichtefilter 12 auf einer Kreisbahn um die in einem Zentrum liegende Lichtquelle 11.2 verschwenkbar ist. Erfindungsgemäß sind zwei Neutraldichtefilter jeweils auf einer Kreisbahn um die im Zentrum liegende Lichtquelle verschwenkbar, wobei die Kreisbahnen unterschiedliche Radien aufweisen, so dass die Neutraldichtefilter sich auf verschiedenen Bahnen bewegen und sich somit bei ihrer Bewegung gegenseitig nicht stören.

Gemäß einem Ausführungsbeispiel der Vorrichtung 10 nach dem ersten Aspekt weist diese ferner mindestens einen Filterrahmen auf, in welchem das mindestens eine Neutraldichtefilter 12 befestigbar ist, wobei in einem derartigen Filterrahmen ein oder mehrere Neutraldichtefilter befestigbar sind. Gemäß einem Ausführungsbeispiel davon weist die Vorrichtung 10 eine Mehrzahl derartiger Filterrahmen auf, welche unabhängig voneinander bewegbar sind.

Gemäß einem Ausführungsbeispiel einer Vorrichtung 10 nach dem ersten Aspekt weist diese ferner eine Antriebseinheit, insbesondere einen Motor, auf, welcher mit dem mindestens einen Neutraldichtefilter 12 verbunden ist, um dieses in Bewegung zu setzen. Im Falle des Vorhandenseins eines Filterrahmens für die Aufnahme des mindestens einen Neutraldichtefilters 12 kann die Antriebseinheit mit dem Filterrahmen verbunden sein. Gemäß einem weiteren Ausführungsbeispiel davon weist die Vorrichtung 10 ferner ein Computerprogramm auf, welches konfiguriert ist, die Antriebseinheit in einer gewünschten Weise anzutreiben. Ein derartiges Computerprogramm kann beispielsweise dafür ausgelegt sein, bei Anwendung der Vorrichtung auf einen Sonnensimulator einen Tagesverlauf der Bestrahlungsstärke der Sonnenstrahlung durch geeigneten Einsatz und Steuerung von zwei oder mehr Neutraldichtefiltern nachzubilden.

Fig. 2 umfasst Fig. 2A bis 2D und illustriert ein spezifisches Ausführungsbeispiel einer Vorrichtung nach dem ersten Aspekt. Fig. 2A zeigt eine perspektivische Ansicht, während Fig. 2B bis 2D Seitenansichten der Vorrichtung aus verschiedenen Richtungen zeigen.

Fig. 2 zeigt eine Vorrichtung 20 zur Anpassung der Bestrahlungsstärke von Licht, welches von einer Strahlungsquelle 21 emittiert worden ist. Von der Strahlungsquelle 21 ist in allen Darstellungen der Fig. 2 nur das Gehäuse 21.1 teilweise zu sehen, während die innerhalb des Gehäuses angeordnete Lichtquelle nicht zu sehen ist. Die Vorrichtung 20 weist ein Neutraldichtefilter 22 auf, welches vor die Strahlaustrittsöffnung der Strahlungsquelle 21 verschwenkt werden kann, wobei sich die Strahlaustrittsöffnung der Strahlungsquelle 21 in der Darstellung der Fig. 2A und 2B unten befindet. In der dargestellten Position des Neutraldichtefilters 22 befindet sich dieses nicht im Strahlengang der von der Lichtquelle emittierten Strahlung, so dass diese nicht gefiltert wird und deren Bestrahlungsstärke nicht reduziert wird.

Die Vorrichtung 20 der Fig. 2 weist ferner einen ersten Filterrahmen 24 auf, an welchem das Neutraldichtefilter 22 befestigt ist. Der erste Filterrahmen 24 ist derart geformt, dass das im Ausgangszustand flächig geformte Neutraldichtefilter 22 sich derart an den ersten Filterrahmen 24 befestigen läßt, dass es im befestigten Zustand entlang eines Abschnitts einer zylindrischen Fläche angeordnet ist. Der erste Filterrahmen 24 ist zu diesem Zweck derart geformt, dass er ein Gestänge aufweist, welches ein Zylindersegment umrandet, wobei an den beiden gegenüberliegenden gebogenen Enden des Zylindersegments Haltelaschen 24.1 angeordnet sind, welche zur Befestigung des Neutraldichtefilters 22 dienen. Das Zylindersegment kann sich über einen Kreisbogenabschnitt in einem Bereich von 110° bis 130°, insbesondere etwa 120° erstrecken, so dass das aus der Strahlaustrittsöffnung austretenden Licht in seinem gesamten Öffnungswinkel erfaßt wird.

Der erste Filterrahmen 24 ist ferner so beschaffen, dass an den gegenüberliegenden Stirnseiten des von seinem Gestänge umrandeten Zylindersegments der erste Filterrahmen 24 im Bereich der Zylinderachse an eine Befestigungswand 230 angelenkt ist, welche mit dem Gehäuse 21.1 der Strahlungsquelle 21 verbunden ist. In ebensolcher Weise ist ein zweiter Filterrahmen 25 an der Befestigungswand 230 befestigt. Der zweite Filterrahmen 25 ist auf ähnliche Weise aufgebaut wie der erste Filterrahmen 24 und lediglich in seinen räumlichen Dimensionen geringfügig kleiner, so dass er innerhalb des ersten Filterrahmens 24 verschwenkbar um die Strahlungsquelle 21 angeordnet ist. An dem zweiten Filterrahmen 25 kann ein zweites Neutraldichtefilter (nicht gezeigt) auf die gleiche Weise befestigt werden, wie das erste Neutraldichtefilter 22 an den ersten Filterrahmen 24.

Das erste Neutraldichtefilter 22 und das zweite Neutraldichtefilter können durch gewebte und gegebenenfalls geschwärzte Edelstahldrähte gegeben sein. Sie können eine voneinander verschiedene Gewebedichte und somit verschiedene Transmissionsgrade aufweisen.

Die Vorrichtung 20 gemäß Fig. 2 weist des Weiteren eine erste Antriebseinheit 26 und eine zweite Antriebseinheit 27 auf, wobei die erste Antriebseinheit 26 mit dem ersten Filterrahmen 24 und die zweite Antriebseinheit 27 mit dem zweiten Filterrahmen 25 verbunden sind. Wie aus Fig. 2C und 2D ersichtlich ist, befinden sich die beiden Antriebseinheiten 26 und 27 an gegenüberliegenden Seiten des Gehäuses 21.1 und sind dort jeweils mit geeigneten Befestigungsmitteln an der jeweiligen Befestigungswand befestigt. Die Antriebseinheiten 26 und 27 sind unabhängig voneinander ansteuerbar, so dass die mit ihnen verbundenen Filterrahmen 24 und 25 entsprechend unabhängig voneinander verschwenkbar sind.

Die Vorrichtung 20 gemäß Fig. 2 weist des Weiteren einen an der Strahlaustrittsöffnung befestigten Standardfilterrahmen 28 auf. Dieser kann dazu dienen, zusätzliche Filter 29 aufzunehmen. Dies können beispielsweise spektrale Filter sein, mit denen eine Anpassung des Emissionsspektrums der Lichtquelle an das Sonnenspektrum erreicht werden kann.

Die Vorrichtung 20 weist des Weiteren Befestigungswinkel 210 und 220 auf, welche an gegenüberliegenden Seiten mit den Befestigungswänden 230 verbunden sind.

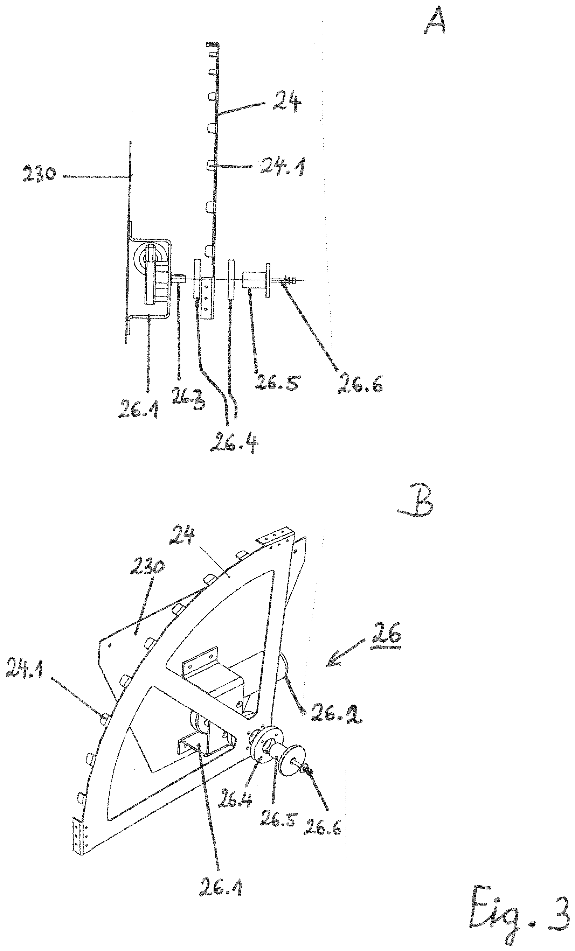

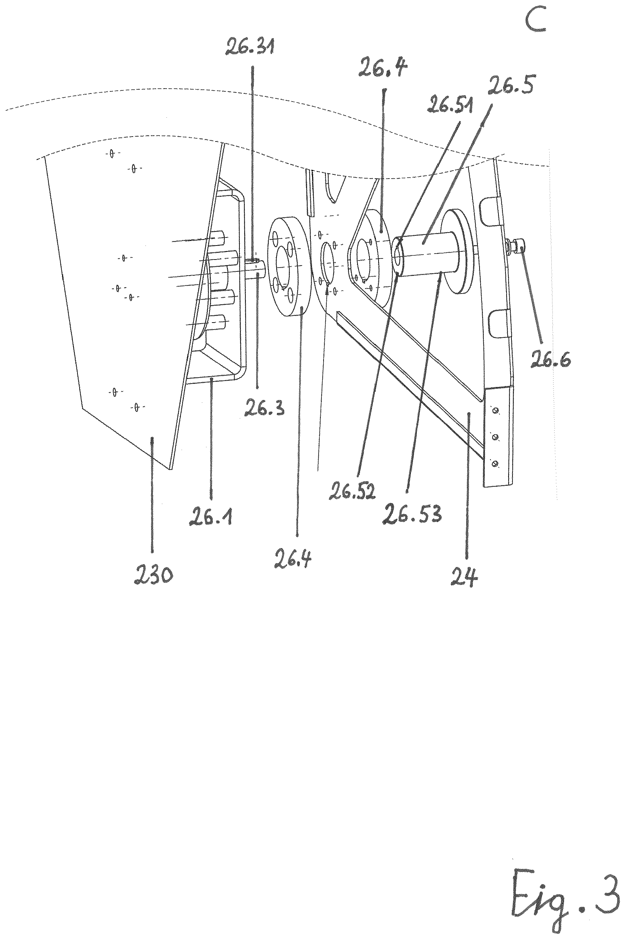

Fig. 3 weist die Figuren 3A bis 3C auf und zeigt Ansichten weiterer technischer Details der Vorrichtung 20 gemäß Fig. 2.

Figuren 3A und 3B zeigen eine Querschnittsseitenansicht (A) und eine perspektivische Ansicht (B) zur Illustration der Verbindung zwischen einem Filterrahmen und einer Antriebseinheit. Die erste Antriebseinheit 26 weist eine Antriebshalterung 26.1 auf, durch welche die wesentlichen Teile der Antriebseinheit gehaltert werden und welche an der Befestigungswand 230 befestigt ist. Die erste Antriebseinheit 26 weist ansonsten im Wesentlichen einen Motor 26.2 und eine mit dem Motor 26.2 verbundene Antriebswelle 26.3 auf. Die Antriebswelle 26.3 ist mit zwei Mitnehmern 26.4 verbunden, zwischen welchen der erste Filterrahmen 24 befestigt ist. Von außen wird ein zylindrischer Zapfen 26.5 durch entsprechende Öffnungen in den Mitnehmern 26.4 und dem ersten Filterrahmen 24 geführt und mittels einer Schraube 26.6 werden sämtliche genannten Teile mit der Antriebswelle 26.3 verbunden.

Figur 3C zeigt weitere Details der Verbindung zwischen dem ersten Filterrahmen 24 und der Antriebseinheit 26. Der Antrieb des ersten Filterrahmens 24 erfolgt mittels Formschluss der Antriebswelle 26.3 mit dem Zapfen 26.5 sowie Formschluss des Zapfens 265 mit dem ersten Filterrahmen 24. Demnach sind zum einen die Antriebswelle 26.3 und der Zapfen 26.5 formschlüssig miteinander verbunden und zum anderen sind der erste Filterrahmen 24 und der Zapfen 26.5 formschlüssig miteinander verbunden. Zu diesem Zweck weist die Antriebswelle 26.3 ein Antriebswellen-Formschlusselement 26.31 auf und der Zapfen weist ein erstes Zapfen-Formschlusselelement 26.51 auf und die Formschlusselemente 26.31 und 26.51 greifen ineinander. Des Weiteren weist der erste Filterrahmen 24 ein Filterrahmen-Formschlusselement 24.2 auf und der Zapfen 26.5 weist ein zweites Zapfen-Formschlusselement 26.52 auf und die Formschlusselemente 24.2 und 26.52 greifen ebenfalls ineinander. Der Zapfen 26.5 weist schließlich noch eine Gleitfläche 26.53 für die Lagerung des zweiten Filterrahmens (nicht dargestellt) auf. Dieser wird auf der gegenüberliegenden Gehäuseseite von der anderen Antriebseinheit 27 auf die gleiche Weise wie der erste Filterrahmen 24 angetrieben und gleitet freilaufend auf Gleitfläche 26.53. Gleichermaßen gleitet der erste Filterrahmen 24 auf einer Gleitfläche eines entsprechenden Zapfens auf der gegenüber liegenden Gehäuseseite.

Auf diese Art und Weise ist jede der beiden Filterrahmen 24 und 25 mittels einer ihrer stirnseitigen Abschnitte auf jeweils einer Seite der Vorrichtung 20 mit einer der Antriebseinheiten 26 und 27 fest verbunden, während der jeweils gegenüberliegende Abschnitt der Filterrahmen 24 und 25 gleitend auf der Gleitfläche des jeweiligen Zapfens gelagert ist.

Die Vorrichtung 20 gemäß Fig. 2 weist des Weiteren Seitenwände 230 und 240 auf, welche auf gegenüberliegenden Seiten des Gehäuses 21.1 mit diesen verbunden sind. Die Antriebseinheiten 26 und 27 sind jeweils mit einer der Seitenwände 230 und 240 verbunden.

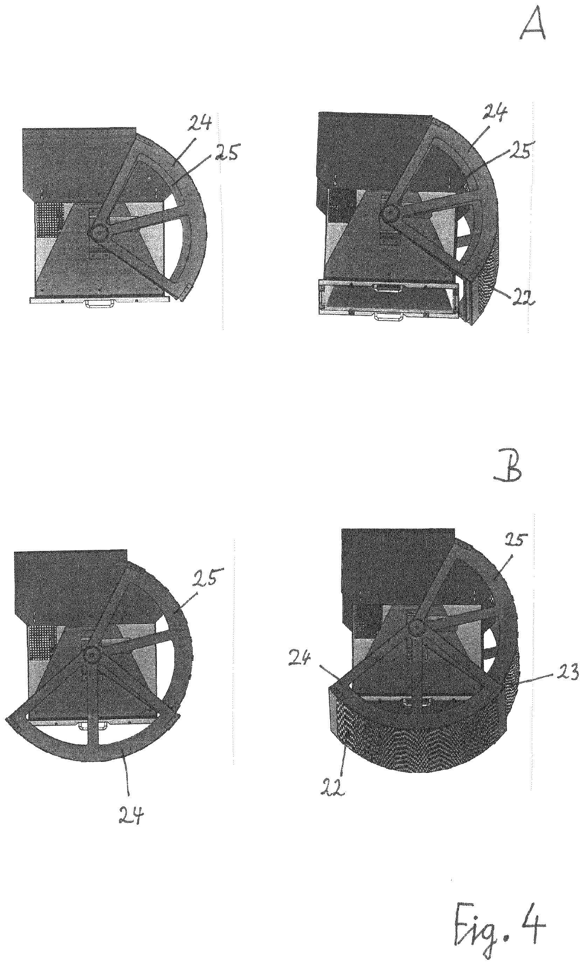

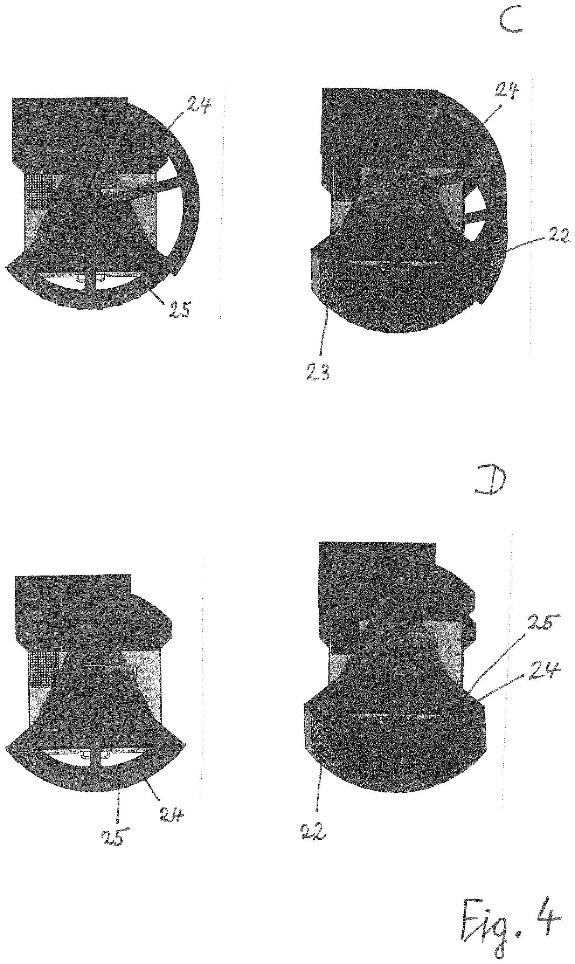

Fig. 4 weist Figuren 4A bis 4D auf und zeigt verschiedene Stellungen der zwei Neutraldichtefilter bei einer Vorrichtung gemäß Fig. 2. Jeder der gezeigten Zustände wird sowohl in einer Seitenansicht als auch in einer perspektivischen Ansicht von unten dargestellt. Es sei angenommen, dass der erste, äußere Filterrahmen 24 ein erstes Neutraldichtefilter 22 mit einem Transmissionsgrad von 30% enthält und dass der zweite, innere Filterrahmen 25 ein zweites Neutraldichtefilter mit einem Transmissionsgrad von 50% enthält.

Fig. 4A zeigt einen Zustand, in welchem beide Filterrahmen 24 und 25 ausgeschwenkt sind, sich demnach keiner der Neutraldichtefilter im Strahlengang der austretenden Lichtstrahlung befindet. Somit ist die Bestrahlungsstärke 100% der von der Lichtquelle emittierten Lichtleistung.

Fig. 4B zeigt einen Zustand, in welchem der erste, äußere Filterrahmen 24 vor die Lichtaustrittsöffnung geschwenkt ist. Somit ist die Bestrahlungsstärke aufgrund der Wirkung des ersten 30%-Neutraldichtefilters 22 70% der emittierten Strahlungsleistung.

Fig. 4C zeigt einen Zustand, in welchem der zweite Filterrahmen 25 mit dem zweiten Neutraldichtefilter 23 vor die Austrittsöffnung geschwenkt ist. Somit ist aufgrund der Wirkung des 50%-Neutraldichtefilters 23 die Bestrahlungsstärke 50% der emittierten Lichtleistung.

Fig. 4D zeigt schließlich einen Zustand, in welchem beide Filterrahmen 24 und 25 vor die Strahlaustrittsöffnung geschwenkt sind. Somit ist aufgrund der Wirkung des ersten 30%-Neutraldichtefilters 22 und des zweiten 50%-Neutraldichtefilters 23 die Bestrahlungsstärke 15% der von der Lichtquelle ursprünglich emittierten Lichtleistung.

Wie bereits weiter oben erwähnt, kann die Lichtleistung der Lichtquelle 11.2 regelbar sin. Beispielsweise kann mittels eines elektrischen Vorschaltgeräts die Lichtleistung zwischen 50% und 100% regelbar sein. Somit ergeben sich in dieser Konstellation für den Einsatz der obigen Filter die folgenden Regelbereiche:
Ohne Filter: 50-100%
Mit 30% Filter: 35-70%
Mit 50% Filter: 25-50%
Beide Filter: 10-20%

Aus dem Vorangegangenen wird deutlich, dass eine Vorrichtung wie eine solche gemäß Fig. 2 sich in idealer Weise für den Einsatz in einem Sonnensimulator eignet, bei welchem mittels dem geschilderten Wechsel in den Positionen der Neutraldichtefilter beispielsweise ein Tageslichtverlauf mit wechselnden Sonnenständen und somit wechselnder Sonnenlichtintensität sehr gut abgebildet werden kann.

Gemäß einem zweiten Aspekt der Offenbarung ist ein Computerprogrammprodukt dafür ausgelegt, eine Vorrichtung gemäß dem ersten Aspekt anzusteuern. Gemäß einem Ausführungsbeispiel davon kann das Computerprogrammprodukt mit den Antriebseinheiten verbunden sein und diese auf eine gewünschte und durch das Computerprogrammprodukt vorgesehene Art und Weise ansteuern. Das Computerprogrammprodukt kann eine Anzahl verschiedener Betriebsarten enthalten. Eine Betriebsart kann vorsehen, dass in einer vorgegebenen zeitlichen Abfolge bestimmte Bestrahlungsstärken, also Gesamt-Transmissionsgrade der Neutraldichtefilter, eingestellt werden sollen. Auf diese Weise kann ein Tageslichtverlauf mit sich verändernden Sonnenständen und Bestrahlungsstärken abgebildet werden. Eine andere Betriebsart kann schnell ändernde Bestrahlungsstärken abbilden, wie sie etwa bei Wolkenbildung oder bei Fahrt in einen Tunnel auftreten können. Letzteres kann gegebenenfalls zusätzlich mit einem Zufallsgenerator gekoppelt sein. Beide beschriebene Betriebsarten können auch miteinander kombiniert werden. Eine einfache Betriebsart kann vorsehen, dass manuell durch Benutzereingabe ein Transmissionsgrad eingegeben wird und dieser dann durch entsprechende Ansteuerung der Antriebseinheiten herbeigeführt wird. Sollte der Transmissionsgrad durch die vorhandenen Neutraldichtefilter nicht exakt eingestellt werden können, so berechnet diese Betriebsart diejenige Filterkombination, durch die der gewünschte Transmissionsgrad bestmöglich approximiert wird. Gemäß einem weiteren Ausführungsbeispiel ist das Computerprogrammprodukt zusätzlich mit der Lichtquelle bzw. dem Steuergerät wie dem elektrischen Vorschaltgerät verbunden, um dieses zu steuern, etwa um innerhalb eines Bereichs zwischen 50 und 100% einen bestimmten Punkt einzustellen. Auf diese Weise kann auch ein gewünschter zeitlicher Verlauf der Lichtleistung zusammen mit der Auswahl eines bestimmten Filters erzeugt werden.

Weitere Ausführungsbeispiele dieses zweiten Aspekts können sich durch Kombination mit weiteren Merkmalen ergeben, wie sie weiter oben im Zusammenhang mit dem ersten Aspekt oder weiter unten im Zusammenhang mit dem vierten Aspekt beschrieben wurden.

Gemäß einem dritten Aspekt der vorliegenden Offenbarung wird ein gewebter Metall- oder Edelstahldraht als Neutraldichtefilter in einer Vorrichtung zur Anpassung der Bestrahlungsstärke, insbesondere einer Vorrichtung gemäß dem ersten Aspekt, verwendet.

Weitere Ausführungsbeispiele dieses dritten Aspekts können sich durch Kombination mit weiteren Merkmalen ergeben, wie sie weiter oben im Zusammenhang mit dem ersten Aspekt oder weiter unten im Zusammenhang mit dem vierten Aspekt beschrieben wurden.

Weitere Ausführungsbeispiele dieses dritten Aspekts können sich außerdem aus der Wahl anderer oben genannter Filtertypen für das Neutraldichtefilter ergeben.

Gemäß einem vierten Aspekt weist eine Vorrichtung zur Prüfung der Auswirkung von Lichtstrahlung auf ein Objekt mindestens eine Vorrichtung nach dem ersten Aspekt und eine Einrichtung zur Aufnahme eines zu bestrahlenden Objekts auf.

Gemäß einem Ausführungsbeispiel des vierten Aspekts ist eine Einrichtung zur Aufnahme eines zu bestrahlenden Objekts dafür ausgelegt ein Kraftfahrzeug aufzunehmen.

Ein derartiger Prüfstand für Kraftfahrzeuge kann insbesondere zur Optimierung von Klimaanlagen, beispielsweise hinsichtlich einer schnellen Regelung bei schnell wechselnder Bestrahlungsstärke (Wolkensimulation und/oder Tunnelsimulation) verwendet werden.

Gemäß einem Beispiel einer Vorrichtung nach dem vierten Aspekt ist die Einrichtung zur Aufnahme eines zu bestrahlenden Objekts dafür ausgelegt, eine Pflanzenwuchskammer aufzunehmen, insbesondere um den Einfluß wechselnder Bestrahlungsstärke zu untersuchen und geographische und saisonale Tagesgänge darzustellen.

Gemäß einem Ausführungsbeispiel einer Vorrichtung nach dem vierten Aspekt ist die Einrichtung zur Aufnahme eines zu bestrahlenden Objekts dafür ausgelegt, Bauteile oder Fahrzeuge für militärische Anwendungen aufzunehmen, um den Einfluß der tagesabhängigen solaren Wärmelast zu simulieren.

Gemäß einem Ausführungsbeispiel einer Vorrichtung nach dem vierten Aspekt ist die Einrichtung zur Aufnahme eines zu bestrahlenden Objekts dafür ausgelegt, Baugruppen aus der Bauindustrie, dem Flugzeugbau, der Sensorik oder der Photovoltaik aufzunehmen, insbesondere um den Einfluß von durch wechselnde Bestrahlungsstärke entstehenden Wärmegradienten zu bewerten.

Gemäß einem Ausführungsbeispiel einer Vorrichtung nach dem vierten Aspekt ist die Einrichtung zur Aufnahme eines zu bestrahlenden Objekts dafür ausgelegt, elektronische Bauteile oder elektronische Komponenten oder Schaltschränke aufzunehmen, insbesondere um den Einfluß der tagesabhängigen solaren Wärmelast zu prüfen.

Weitere Beispiele einer Vorrichtung nach dem vierten Aspekt können sich durch Kombination mit Merkmalen, wie sie weiter oben im Zusammenhang mit dem ersten Aspekt, dem zweiten Aspekt oder dem dritten Aspekt genannt wurden, ergeben.

Obwohl spezifische Ausführungsformen in dieser Beschreibung dargestellt und beschrieben wurden, ist für den Fachmann auf dem Gebiet zu erkennen, dass die gezeigten und beschriebenen spezifischen Ausführungsformen gegen eine Vielfalt von alternativen und/oder äquivalenten Implementierungen ausgetauscht werden können, ohne vom Schutzbereich der vorliegenden Erfindung abzuweichen. Diese Anmeldung soll jegliche Anpassungen oder Veränderungen der hierin erörterten spezifischen Ausführungsformen abdecken. Daher ist vorgesehen, dass diese Erfindung nur durch die Ansprüche und deren Äquivalente begrenzt ist.

## Patentansprüche

1. Vorrichtung (20) zur Anpassung der Bestrahlungsstärke, mit
einer Strahlungsquelle (21); und
zwei vor der Strahlungsquelle (21) bewegbar angeordneten Neutraldichtefiltern (22, 23), wobei die Neutraldichtefilter in den Strahlengang der Strahlungsquelle oder aus dem Strahlengang der Strahlungsquelle bewegt werden können und im Strahlengang der von der Strahlungsquelle emittierten Strahlung (14) hintereinander anordenbar sind,
**dadurch gekennzeichnet, dass**
beide Neutraldichtefilter (22, 23) sich jeweils über ein Segment von einer von zwei zylindrischen Flächen erstrecken, die mit unterschiedlichen Radien von einer gemeinsamen Zylinderachse beabstandet sind, auf der die Strahlungsquelle (21) angeordnet ist, wobei
beide Neutraldichtefilter (22, 23) jeweils entlang der jeweiligen zylindrischen Fläche unabhängig voneinander um die Strahlungsquelle (21) verschwenkbar sind.

2. Vorrichtung (20) nach Anspruch 1, bei welcher
beide Neutraldichtefilter (22, 23) jeweils einen gewebten Metall- oder Edelstahldraht, aufweisen.

3. Vorrichtung (20) nach einem der vorhergehenden Ansprüche, bei welcher
die zwei Neutraldichtefilter (22, 23) voneinander verschiedene Dichtefaktoren aufweisen.

4. Vorrichtung (20) nach einem der vorhergehenden Ansprüche, ferner mit
zwei Filterrahmen (24; 25), in welchen die zwei Neutraldichtefilter (22; 23) befestigbar sind, wobei in einem Filterrahmen ein oder mehrere Neutraldichtefilter befestigbar sind.

5. Vorrichtung (20) nach einem der vorhergehenden Ansprüche, ferner mit
zwei Antriebseinheiten (26, 27), welche mit den zwei Neutraldichtefiltern (22, 23) verbunden sind, um diese in Bewegung zu setzen.

## Claims

1. Device (20) for adjusting the irradiance, with
a radiation source (21); and
two neutral density filters (22, 23) movably arranged in front of the radiation source (21), wherein the neutral density filters can be moved into the beam path of the radiation source or out of the beam path of the radiation source and can be arranged one behind the other in the beam path of the radiation (14) emitted by the radiation source,
**characterized in that**
both neutral density filters (22, 23) each extend over a segment of one of two cylindrical surfaces spaced at different radii from a common cylinder axis on which the radiation source (21) is located, wherein
both neutral density filters (22, 23) are each pivotable along the respective cylindrical surface independently of one another around the radiation source (21).

2. Device (20) according to claim 1, in which
both neutral density filters (22, 23) each have a woven metal or stainless steel wire.

3. Device (20) according to one of the preceding claims, in which
the two neutral density filters (22, 23) have different density factors from each other.

4. Device (20) according to one of the preceding claims, further comprising
two filter frames (24; 25) in which the two neutral density filters (22; 23) can be mounted, wherein one or more neutral density filters can be mounted in a filter frame.

5. Device (20) according to one of the preceding claims, further comprising
two drive units (26, 27) connected to the two neutral density filters (22, 23) to set them in motion.

## Revendications

1. Dispositif (20) pour le réglage de l'irradiation, avec
une source de rayonnement (21); et
deux filtres à densité neutre (22, 23) disposés de manière mobile devant la source de rayonnement (21), les filtres à densité neutre pouvant être déplacés dans le trajet du faisceau de la source de rayonnement ou hors du trajet du faisceau de la source de rayonnement et pouvant être disposés l'un derrière l'autre dans le trajet du faisceau du rayonnement (14) émis par la source de rayonnement,
**caractérisé en ce que**
les deux filtres à densité neutre (22, 23) s'étendent chacun sur un segment de l'une de deux surfaces cylindriques espacées de rayons différents d'un axe de cylindre commun sur lequel est située la source de rayonnement (21), dans lequel les deux filtres à densité neutre (22, 23) peuvent chacun pivoter le long de la surface cylindrique respective indépendamment l'un de l'autre autour de la source de rayonnement (21).

2. Dispositif (20) selon la revendication 1, dans lequel
les deux filtres à densité neutre (22, 23) ont chacun un fil métallique tissé ou en acier inoxydable.

3. Dispositif (20) selon l'une des revendications précédentes, dans lequel
les deux filtres à densité neutre (22, 23) ont des facteurs de densité différents l'un de l'autre.

4. Dispositif (20) selon l'une des revendications précédentes, comprenant en outre
deux cadres de filtre (24 ; 25) dans lesquels les deux filtres à densité neutre (22 ; 23) peuvent être montés, dans lesquels un ou plusieurs filtres à densité neutre peuvent être montés dans un cadre de filtre.

5. Dispositif (20) selon l'une des revendications précédentes, comprenant en outre
deux unités d'entraînement (26, 27) qui sont reliées aux deux filtres à densité neutre (22, 23) pour les mettre en mouvement.
